# EUROPEAN PATENT APPLICATION

(11) **EP 4 821 354 A1**
(43) Date of publication of application: **14.10.2026**
(21) Application number: 25169742.1
(22) Date of filing: 10.04.2025
(51) Int. Cl.: A01M 1/20, A01G 11/00, A01M 19/00

(54) **A METHOD FOR REMOVING PESTS FROM A ROOT BALL OF A PLANT AND A SYSTEM THEREOF**

(71) Applicant: Splendor Plant AB, 263 92 Jonstorp (SE)
(72) Inventor: ANDERSEN, Nils, 263 72 Skäret (SE)
(74) Representative: Zacco Sweden AB

(57) **Abstract**

A method (800) for removing pests from a root ball (102) of a plant (100) using a system (416) is disclosed. The pests can comprise invasive alien species. The system (416) comprises an open tank (200) arranged to hold temperature-controlled water (210), a grating (206) placed in the open tank (200), and a lifting arrangement (202) arranged to move the grating between a lifted position and a lowered position. The method comprises placing (802) the root ball (102) on the grating (206), lowering (804) the grating (206) to the lowered position such that the root ball (102) is submerged in the temperature-controlled water (210), holding (806) the grating (206) in the lowered position for a treatment time (t-treat) such that the pests in the root ball (102) are exposed to the temperature-controlled water (210) and killed off, and lifting (808) the grating (206) from the lowered position to the lifted position such that the temperature-controlled water (210) is drained off the root ball.

## Description

### Technical Field

The invention generally relates to removing pests, such as plant pathogens and invasive alien species, from plants. More particularly, it is related to a method for removing pests from a root ball of a plant, and a system thereof.

### Background Art

For plant wholesalers, plant nurseries, gardening companies and other businesses handling plants, it is a general problem to identify and neutralize invasive alien species such that the spreading of these can be hindered. The problem with invasive alien species has increased over the last decades as an effect of the increased global trade of plants. An example that is currently causing significant problems in Europe is the flatworm Obama nungara native from South America. This flatworm's predatory habits threatens local ecosystems by reducing populations of beneficial invertebrates, especially earthworms which are essential for soil health and nutrient recycling.

There are different ways to identify the Obama nungara flatworms and other invasive alien species. A straight-forward approach is ocular inspection. Even though this approach is sufficient for assessing minor batches of plants, it is time consuming and there is a non-negliable risk that some individuals of the worms are not detected. At least for these reasons, ocular inspection is generally not a viable option for large-scale handling of plants. In order to be more efficient and also to reduce the risk of overlooking hidden individuals, dogs have been trained to identify the characteristic smell of the Obama nungara flatworms. This approach has several advantages compared to the ocular inspection, but it is costly to train dogs and since the dog can only work for a couple of hours in a row, several dogs are required for large-scale handling of plants.

If the Obama nungara flatworms are detected, these can be neutralized, that is, killed, by either freezing or heating the root balls of the plants. By having the root balls exposed to temperatures outside a temperature tolerance range of the Obama nungara worm, the worms are neutralized.

As described above, the Obama nungara worms can be detected either by ocular inspection or via their smell by using trained dogs. Once having identified that there are worms, the root balls of the plants can either be exposed to heat or cold in order to kill off the worms. Even though the approaches known today can be used for removing the worms, these are not suitable for large-scale handling of plants.

### Summary

It is an object of the invention to at least partly overcome one or more of the above-identified limitations of the prior art. In particular, it is an object to provide a cost-efficient and reliable approach to kill off Obama nungara worms and other invasive alien species, in particular for large-scale handling of plants.

According to a first aspect it is provided a method for removing pests from a root ball of a plant using a system, wherein the pests may comprise invasive alien species and/or plant pathogens, wherein the system comprises an open tank arranged to hold temperature-controlled water, a grating placed in the open tank, and a lifting arrangement arranged to move the grating between a lifted position and a lowered position, said method comprising placing the root ball on the grating, lowering the grating to the lowered position such that the root ball is submerged in the temperature-controlled water, holding the grating in the lowered position for a treatment time such that the pests in the root ball are exposed to the temperature-controlled water killed off, and lifting the grating from the lowered position to the lifted position such that the temperature-controlled water is drained off the root ball.

An advantage with this is that the pests may be removed efficiently, both in terms of cost and time. Still an advantage is that the pests can be removed reliably.

In addition to having the pests killed off due to the increased temperature, the pests can also be removed during drain-off. By having the water held in the root ball drained off, worms or other pests may be removed together with the drained off water. Since the drain-off is taking place above the open tank, the pests fall into the temperature-controlled water with the effect that these are killed.

To avoid having parts of the plant above the root ball exposed to the temperature-controlled water unnecessarily, the lowered position may be set by that an operator by manually lowering the grating into position and thereafter saving a position setting such that this can be transferred to a controller, e.g. a PLC, of the lifting arrangement. By having this position setting saved, the grating can be automatically placed in this position in following submersions of the root ball. By using this approach, different sizes of root balls can handled efficiently without exposing upper parts of the plant to the temperature-controlled water unnecessarily. Since the operator need to set the lowered position once, submerging the root ball into the temperature-controlled water multiple times will not increase the workload for the operator and also provide for that the process can be made time efficiently.

The method may further comprise pre-processing the root ball by, for a number of times, lowering the grating to the lowered position such that the root ball is submerged in the temperature-controlled water, holding the grating in the lowered position such that the temperature-controlled water is entering into the root ball for a heating sub-period, lifting the grating to the lifted position such that the temperature-controlled water is drained off, and holding the grating in the lifted position for a drain-off sub-period.

By having the plants submerged multiple times and be allowed to drain off there between, the root ball may efficiently be heated. Further, by submerging the root ball multiple times different parts of the root ball are reached more efficiently by the temperature-controlled water. In comparison, by having the root ball submerged a single time, there is a risk that cavities of air are formed within the root ball with the effect that the heat treatment to remove the pests is less reliable.

The method may further comprise determining a root ball type associated to the root ball, retrieving time settings data comprising the heating sub-period and the drain-off sub-period linked to the root ball type from a memory, and adjusting settings of the lifting arrangement using the time settings data.

Different root balls may be constituted differently. For instance, different root balls may differ in terms of size, and also in terms of type of covering used. By being able to adjust the time settings of the lifting arrangement according to these root ball attributes it is made possible to further reduce the time needed for processing the root balls.

The root ball type may be associated to a size of the root ball, and/or to a presence or non-presence of a covering of the root ball. A common example of the covering is a pot or a container.

Prior to the step of placing the root ball on the grating, the method may comprise collecting volatile organic compound VOC data by using one or more VOC sensors in a pest detection station placed upstream the open tank, transferring the VOC data to a data processing device, determining presence or non-presence of the pests by using by the data processing device, in case the presence of the pests is determined, transferring the plant to a pest removal station comprising the open tank, and perform the steps of placing the root ball on the grating, lowering the grating, holding the grating in the lowered position for the treatment time, and lifting the grating, thereby removing the pests from the root ball of the plant, and transferring the plant to a pest-free zone, or in case the non-presence of the pests is determined, transferring the plant to the pest-free zone without having the root ball exposed to the temperature-controlled water in the open tank.

By being able to detect whether or not the pests are present upstream the pest removal station, it is made possible to avoid unnecessary pest removal treatment of plants.

In case the VOC sensors is not only able to determine the presence or non-presence of the pests, but also to what species of pests that are present in the root ball, it is made possible to adjust the time settings data based on the VOC data to address the species of pests being detected. Such adjustments may include choosing a program comprising a specific temperature of the temperature-controlled water and a specific treatment time addressing the species detected. Being able to detecting the species and pinpointing treatment parameters comes with at least two advantages. First, the risk of insufficient treatment with the result that the pests are not removed adequately can be reduced. Second, by having information of the species, tolerance levels can be lowered with the effect that any side-effects of the plant caused by the treatment can be lowered. Put differently, the risk of "over killing" can be lowered.

The the step of determining the presence or the non-presence of the pests may comprise determining presence of alive pests, presence of dead pests, presence of pest egs, non-presence of the alive pests, non-presence of the dead pests and non-presence of the pest egs.

As an effect of being able to identify the pests on a more granular level, it is made possible to detect pests not possible, or at least difficult, for a trained dog to reliably detect. Further, by being able to identify the pests on a more detailed level, it is made possible to adapt the time settings and possibly also the temperature of the water more precisely and in such way achieve a more efficient pest removal.

The pests may be flat worms of the species Obama Nungara, and the temperature-controlled water may be in the range 34 to 44 degrees Celsius, and the treatment time may be 8 to 17 minutes.

The method may further comprise circulating the temperature-controlled water in the open tank through a pipe system using a pump, and passing the temperature-controlled water through a filter setup arranged in the pipe system.

By using the filter set-up in this way, dirt and the like from the root balls may be captured as well as the pests flushed out from the root balls. By having a multi-stage filter, the pests can be captured and sorted out from out from other filtered material. An advantage with this is that the pests flushed out from the root ball during the drain off, or drain offs, in the lifted position may be identified and neutralized.

The temperature-controlled water may be heated by using one or more heater elements placed in a lower part of the open tank and/or a heat pump placed in the pipe system.

In a loading position, the grating may be held above or at level with a brim of the open tank, wherein the step of placing the root ball in the open tank may be performed by using a forklift truck.

An advantage with this is that this provides improved efficiency and that the number of plants handled per time unit can be improved. The plants may be placed on a pallet that is in turn placed on the grating such that the pallet with the plants are submerged into the temperature-controlled water or the plants may be placed directly on the grating.

The method may further comprise placing the root ball on a water-filled tray, and moistening the root ball through capillary forces.

As an alternative, instead of having the water-filled tray as a stand-alone piece of equipment, the open tank may act as the water-filled tray. By having the root-ball placed in the open tank and filling the open tank with water such that only a lower part of the root balls are covered, the root balls can be moistened through capillary forces inside the tank. Once the root balls are moistened, additional water may be filled into the tank such that the root balls can be submerged in water as explained above.

Still further, the moistening can also be achieved by lowering the grating. By way of example, in case the root ball is dry, the grating holding the root ball may in a first step be lowered such that a bottom of the root ball is about 2-3 cm below the water level. In this position, the root ball may be moistened through capillary forces. Once moistened, in a second step, the grating may be lowered an additional 3-4 cm such that a larger part of the root ball is exposed to the water, thereby providing for that the heating of the root ball can be made efficiently. The principle of lowering the root ball in steps can be made in various ways and the time used in the different steps, the number of steps, height differences between the different steps, etc may be adjusted to meet the specific features of the root ball, e.g. size, density and type of covering. After the moistening is achieved such that root ball will not float, the process may continue with the heating of the root ball and thereafter the treatment in which the pests are killed off.

An advantage with this is that in case the root ball is dry, there is a risk that this will float when the grating is lowered into the water. To avoid that this happens, the root ball may be pre-processed by having this placed on the water-filled tray such that the water content in the root ball is increased.

According to a second aspect it is provided a system for removing pests from a root ball of a plant, wherein the pests may comprise invasive alien species. The system may comprise an open tank arranged to hold temperature-controlled water, a grating placed in the open tank, and a lifting arrangement arranged to move the grating between a lifted position and a lowered position, wherein the root ball, when placed on the grating in the lowered position, is exposed to the temperature-controlled water for a treatment time, and, when placed on the grating in the lifted position, the root ball is held above a water level such that the temperature-controlled water is drained off the root ball into the open tank.

The same advantage and features as presented above with respect to the first aspect also apply to this second aspect.

The system may further comprise a controller configured to receive a root ball type associated to the root ball, retrieve time setting data linked to the root ball type from a memory, and adjust settings of the lifting arrangement using the time settings data.

The pests may comprise flat worms of the species Obama Nungara, the temperature-controlled water may be in the range 34 to 44 degrees Celsius, and the pre-determined time may be 8 to 17 minutes.

In a loading position, the grating may be held above or at level with a brim of the open tank.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a general illustration of heat treating plants for removing pests from the root balls.
Fig. 2A illustrates an open tank with a grating in a lifted position, wherein plants are loaded onto the grating by a forklift truck.
Fig. 2B illustrates the open tank with the grating in a lowered position such that the root balls of the plants are submerged into temperature-controlled water in the tank.
Fig. 2C illustrates the grating being lifted from the lowered position illustrated in fig. 2B into the lifted position such that water is drained off from the root balls.
Fig. 2D illustrates the grating in the lowered position such that the root balls are once again exposed to the temperature-controlled water.
Fig. 2E illustrates the grating in the lifted position such that the water is once again drained off from the root balls.
Fig. 3 is graph showing a grating position over time.
Fig. 4 illustrates a system comprising a pest detection station, a pest removal station, in turn comprising the open tank and the lifting arrangement, and a pest free zone.
Fig. 5 illustrates the open tank provided with a pipe system.
Fig. 6A illustrates a perspective view of the lifting arrangement according to a first example.
Fig. 6B illustrates a front view of the first example.
Fig. 6C illustrates a side view of the first example.
Fig. 7 illustrates a perspective view of a second example.
Fig. 8 is a flowchart illustrating a method for removing pests from the root ball.

### Detailed Description

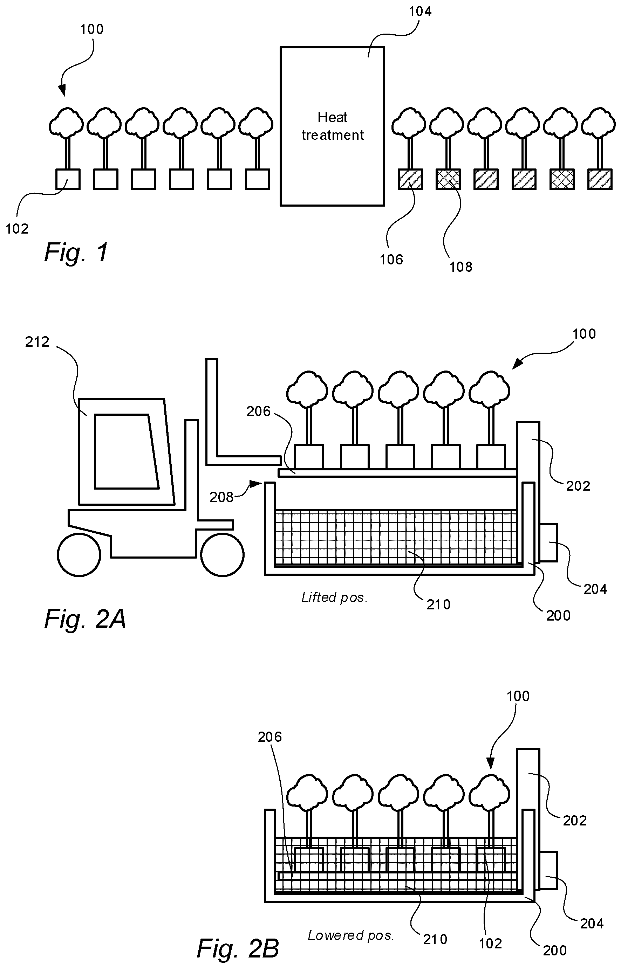

Fig. 1 illustrates a general process of today for neutralizing pests in a root ball 102 of a plant 100. In this context, pests may comprise invasive alien species, e.g. Obama nungara worms, but also other unwanted organisms that may be harmful to the plant itself or that should be removed to avoid that these are spread and thereby have a negative effect on other plants or animals. For instance, the Obama nungara worms may, if not removed, have the negative effect that the number earthworms is reduced, which may have severe consequences for ecological systems.

An approach to neutralize the pests is to heat the plant such that the pests are killed off. Another approach is to freeze the plant to the degree that the pests are killed off. As illustrated, after being exposed to a heat treatment 104, which may involve heating or freezing, the plants may have either a root ball with pests 106 or a root ball without pests 108. Put differently, if the heat treatment is not made diligently and well-controlled, there may be a risk that the pests are not removed completely. One way of reducing the risk that the pests are not removed completely is to increase a heating temperature or lower a freezing temperature. However, using more extreme temperatures or to increase an exposure time comes with the negative effect that also the plant and microorganisms in the root ball not to be removed may be affected negatively.

To reduce the negative effects on the plants not carrying the pests and also to save costs, it has been suggested to use dogs for detecting the Obama nungara worm before the heat treatment. Even though the dogs can detect the worms, there is a substantial cost for training the dogs and in order to be alert the dogs should not work for extensive periods of time, but should be allowed to rest from time to time.

Fig. 2A illustrates by way of example a system that can be used for removing pests from the root ball 102 of the plant 100 in an efficient and reliable manner that is particularly relevant for large-scale handling of plants. As illustrated, the system can comprise an open tank 200, a lifting arrangement 206, comprising a motor 204, and a grating 206. The lifting arrangement 202 is configured to move the grating 206 between a lifted position, as illustrated in fig. 2A, and a lowered position, as illustrated in fig. 2B.

In the lifted position, the grating 206 may be lifted above a brim 208 of the open tank 200 such that the plant 100 can easily be loaded onto the grating. For instance, as illustrated, by having the grating 206 lifted above the brim 208 or in level with the brim, it is made possible to load the plant 100 onto the grating 206 by using a forklift truck 212 or other equivalent piece of equipment. In addition to facilitate loading of the plant 100 onto the grating 206, in the lifted position, the plant 100 is held above temperature-controlled water 210 provided in the open tank 200. An advantage with this is that when processing a plurality of plants at the same time, i.e. when multiple plants are provided on the grating, all plants may be provided on the grating before this is lowered into the temperature-controlled water. This comes with the effect that all plants, i.e. the entire batch, will be exposed to the temperature-controlled water for the same period of time, which improves both reliability as well as predictability.

In the examples illustrated the lifted position coincides with a loading position. This does not necessarily have to be the case, the loading position of the grating is preferably above the brim 208 such that the plants can easily be loaded onto the grating by using the forklift truck or other similar piece of equipment serving the same purpose. In the lifted position, the water is drained off from the root ball. Since this can be achieved by having the grating above a water level, but not necessarily above the brim, the lifted position may be lower than the loading position even though not illustrated so in the examples illustrated.

Once the plant, or plants, 100 have been loaded onto the grating 206, this is lowered into the temperature-controlled water 210 as illustrated in fig. 2B. Put differently, the grating 206 holding the plants is lowered from the lifted position to the lowered position. In the lowered position, the root ball 102 is exposed to the temperature-controlled water 210 such that the pests, e.g. the Obama nungara worms, are killed off. As illustrated, the system may be arranged such that the root ball is exposed to the temperature-controlled water 210, but not an upper part of the plant 100. By using this approach, the negative effects on the plants can be reduced.

To be able to adjust the operation to a specific type of root ball, an operator may lower the grating 206 manually during a first submersion. The operator may adjust the position of the grating such that the root ball 102 and 1-2 cm of the plant above the root ball are exposed to the temperature-controlled water. The operator may control the position of the grating by using buttons or the like provided on or connected to the lifting arrangement. This position may be saved and provided to a controller, e.g. a PLC, such that the grating can be lowered to this position in future submersions.

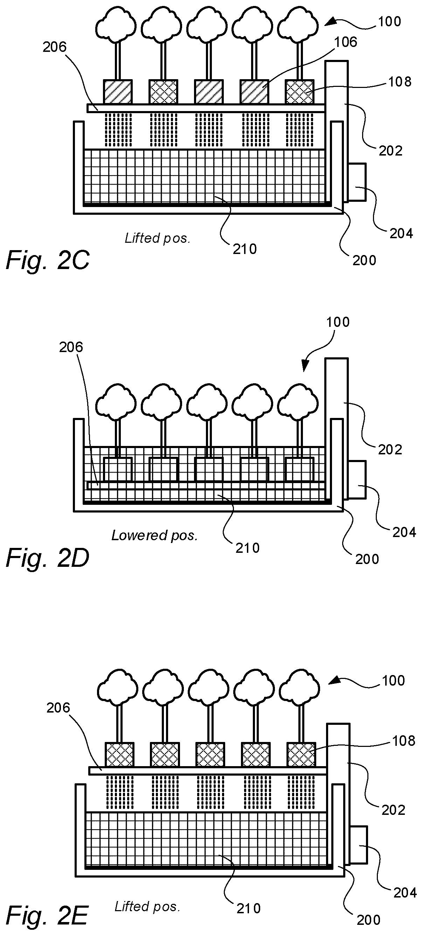

After being exposed to the temperature-controlled water 210, the grating 206 can be lifted up from the open tank 200, that is, moved from the lowered position to the lifted position, as illustrated in fig. 2C. Once again in the lifted position, the temperature-controlled water 210 can be drained off from the root ball 102 or root balls. By having the water running through the root ball 102 during the drain off, the pests, which may be affected by the temperature-controlled water 210 even though not killed, can be flushed down into the open tank 102 together with the drained off water. Put differently, in addition to being killed off by the increased temperature, the pests may also be removed due to the movement of the water in the root ball.

At this stage, some of the root balls may be root balls with pests 106 and some without pests 108.

After being drained off, the grating 206 and the root ball 102 may be lowered again to the lowered position as illustrated in fig. 2D. Once again, the root ball 102 is exposed to the temperature-controlled water 210. By having the root ball 102 lowered and lifted multiple rounds provides for a more efficient process in terms of time. By having the root ball already exposed to the water once and also drained off, the root ball may be constituted differently a second time this is exposed to the temperature-controlled water. This comes with the benefit that the likelihood of reaching parts of the root ball that was not reached during the first exposure may be reached this second exposure. In addition, by using multiple submersions the root ball may be heated more time efficiently compared to having the root ball submerged only once.

As illustrated in fig. 2E, after being exposed to the temperature-controlled water 210 the second time, the grating 206 may be moved to the lifted position again and the water may be drained off, possibly with the additional effect that remaining pests are removed together with the drained off water as described above. After these two exposures, the root balls may be without pests as illustrated. In other examples, for plants having a larger root ball and/or a different covering, more than two exposures may be preferred to efficiently remove the pests.

Even though not illustrated, temperature sensors in the form of temperature probes may be inserted in a sub-set or all of the root balls being processed. By measuring temperatures of the root balls in this way, a more precise and reliable pest removal can be achieved. Having the temperature sensors, the number of submersions, also referred herein as iterations or rounds, may be determined dynamically. More specifically, the submersions may continue up until a target temperature in the root ball, or root balls if several plants are handled at the same time, has been reached. Once having reached the target temperature, the grating can be lowered such that the root balls are exposed to the temperature-controlled temperature for a treatment time.

The number of submersions and the heating sub-period and the drain-off sub-period used during these submersions may be chosen to address the root ball specifically, e.g. the size of the root ball and the covering of the root ball. The treatment time, that is, the time the root ball is submerged into the temperature controlled water after the target temperature has been reached, may be set to address the pests detected, or assumed to be present, in the root ball. The target temperature is also set based on the pests detected, or assumed to be present, in the root ball. By addressing these two challenges in two different process steps, a more reliable overall process is achieved.

Even though not illustrated, after the plants have been treated by the temperature-controlled water, the grating may be placed in the loading position and the forklift truck may unload the plants from the grating.

As discussed above, there are benefits with having the root balls 102 exposed to the temperature-controlled water 210 more than once. The number of exposures and also periods of time for the different exposures as well as the drain offs, that is, the period of times the root balls are held in the lowered position and the lifted position, can be determined based on a number of factors. One such factor is which type of covering the root ball 102 has, if any. For instance, the root ball may be provided by a covering in that this is placed in a container. Further, this may be placed in a tray with other root balls. Still a possibility is to have this forming part of a mat with multiple root balls or form part of a turf with multiple root balls. Still further, the root ball may be wrapped in a burlap. Even still further, the root ball may comprise roots and soil or only roots, so-called bare roots. Since the time it takes for the temperature-controlled water held in the open tank to reach the root ball depends on the type of covering, the time the root ball is set to be in the temperature-controlled water may depend on the type of covering. Another factor to take into consideration is a size of the root ball. Additional factors to take into account is a type of soil in the root ball, a density of the root ball, a water flow in the open tank, etc.

Further, for time efficiency purposes, since most of the water held in the root ball is drained off in less than a minute, it is made possible to reach the target temperature by using multiple submersions.

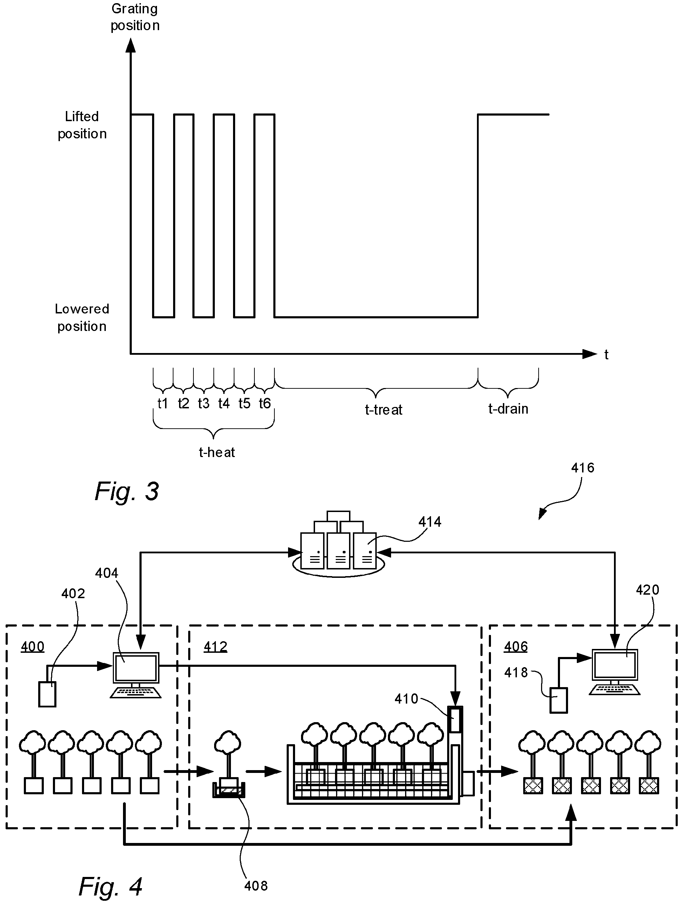

Fig. 3 illustrates by way of example a graph illustrating a program for processing the root ball 102, that is, a processing involving exposing the root ball three times to the temperature controlled water for heating the root ball and thereafter for the treatment time to expose the root ball for the temperature-controlled water such that the pests are killed off. As illustrated, a heating time t-heat may comprise three submersions. In the illustrated example, the grating starts in the lifted position and is lowered to the lowered position and is held in this position for a first period of time t1, being a heating sub-period. After this first exposure, or submersion, the grating is lifted to the lifted position and held in this position for a second period of time t2. During this second period of time t2, being a drain-off sub-period, water is drained off, potentially also pests, into the open tank. Thereafter, the grating is lowered to the lowered position and held in this position for a third period of time t3, and then lifted to the lifted position and held in this position for a fourth period of time t4. After this second iteration, the grating holding the root ball is again lowered to the lowered position and held in this for a fifth period of time t5. After being submerged a third time, the grating is lifted to the lifted position and held in this for a sixth period of time t6. By way of example, the heating sub-periods t1, t3, t5 may be a minute, and also the drain-off sub-periods t2, t4, t6 may be a minute. Even though the sub-periods in this example is equally long, this does not have to be the case. For instance, in case the root ball is very dense, longer sub-periods may be needed. The different sub-periods may also be individually set if this can lower the time it takes for increasing the temperature of the root ball to the target temperature.

Once having the root ball heated, this is submerged into the temperature-controlled water for the treatment time t-treat. This treatment time t-treat is chosen such that the pests to remove are killed off. Different pests can stand different temperatures for different period of times, and by setting the target temperature and the treatment time t-treat, different species of pests can be addressed. In this particular example in which the Obama nungara is addressed, the treatment time may be 10 minutes.

After having had the root ball exposed to the temperature-controlled water for the treatment time t-treat, the grating holding the root ball may be lifted to the lifted position such that the root ball can be drained off for a draining time t-drain.

The program for processing the root ball, e.g. the number of submersions and the different times involved, may develop over time and by having the system connected to a central server or the like, updates may be provided at regular intervals. By being able to reduce the time it takes to kill off the pests, several advantages are achieved. First, improved cost-efficiency can be achieved for large-scale handling of plants in that a larger number of plants can be processed per time unit. Second, improved running costs for the system can also be achieved by having a reduced processing time in that an energy cost per plant can be lowered. Third, for sensitive plants, the reduced processing time may also have a positive impact in that the plant is less affected, i.e. a risk that the plant is negatively affected by the processing can be reduced.

As described above, there are several benefits with using the open tank, the grating and the lifting arrangement compared to using other types of heat treatment. However, even though the processing suggested herein for removing the pests is advantageous, there are situations in which the removal of the pests nevertheless can be avoided. By way of example, as illustrated in fig. 4, a pest detection station 400 may be placed upstream a pest removal station 412 comprising the open tank, the lifting arrangement and the grating. The pest detection station 400 may comprise a volatile organic compound VOC sensor 402 connected to a data processing device 404. By using this set up, it is possible to identify the root ball comprising pests and the root balls without pests. The root balls without pests can be forwarded to a pest free zone 406. Put differently, for the root balls identified to not comprise pests, the pest removal station 412 can be by-passed. This is advantageous in that less plants need to be processed by the pest removal station 412, but also avoiding that the plants not comprising the pests are unnecessarily exposed to the temperature-controlled water.

The VOC sensor 400 and the data processing device 404 may be tuned not only to detect pests generally, but even presence of alive pests, presence of dead pests, presence of pest egs, non-presence of the alive pests, non-presence of the dead pests and non-presence of the pest egs. If having this granularity, it is made possible to detect pests that may be difficult for a trained dog to detect. For instance, detecting pest egs is generally more difficult than detecting alive pests. Further, if being able to detect dead pests, it is made possible to verify that the plants have already been processed.

In case the root ball 102 is dry, there is a risk that this will float when the grating is lowered. In order to reduce this risk, a pre-processing step may be used for such dry root balls. As illustrated, this pre-processing may involve that the root ball is placed in a water-filled tray 408 such that the root ball can be moistened through capillary forces. As alternative to the approach illustrated, it is also possible to use the open tank as the water-filled tray 408. By placing the plants having dry root balls in the open tank and fill water into the tank such that only a lower part of the root balls are placed in the water, the root balls may be moistened by using the capillary forces in the open tank. Once the root balls are no longer dry, additional water may be filled into the tank and the root balls may be treated by being submerged into the water.

As discussed above, the periods of time of the program used for processing the root ball may depend on various factors, such as the type of covering, the size of the root ball, etc. This information may be linked to a so-called root ball type. The root ball type may in turn be linked to a barcode, QR code, or the like printed or in other ways provided on the plant. By reading the information from e.g. the barcode, the root ball type may be determined and by providing the information associated to the root ball type to a controller 410 of the lifting arrangement 202, operation of the lifting arrangement may be adapted to the root ball being assessed in the pest detection station 400. As illustrated, the data processing device 404 may be communicatively connected to a server having a memory 414. By having this set up, time settings data to be used for processing the root ball may be downloaded after the root ball type is determined, e.g. via reading the barcode. Having the memory 414 on the server as illustrated comes with the benefit that the time periods, as well as the number of exposures, used for processing may be improved over time and shared easily with different systems 416. The QR code, tag or other carrier holding the root ball type, either directly or indirectly, may be plant-specific or batch-specific, i.e. information about the plant may be provided for each individual plant or the information may be provided for a group of plants.

As illustrated, a VOC sensor 418, sometimes referred to as a digital nose, connected to a data processing device 420 may also be provided downstream the pest removal station 412. By having these provided, e.g. in the pest free zone 406 as illustrated, the root balls may be assessed based on VOC data to assure that the pests have been removed. In case dead pests can be identified by the VOC sensor 418 in combination with the data processing device 420, it is made possible to continuously evaluate the efficacy of the pest removal station, especially if the VOC sensor 402 is also provided and information from the two VOC sensors are combined, e.g. by both being providing information to the server 414.

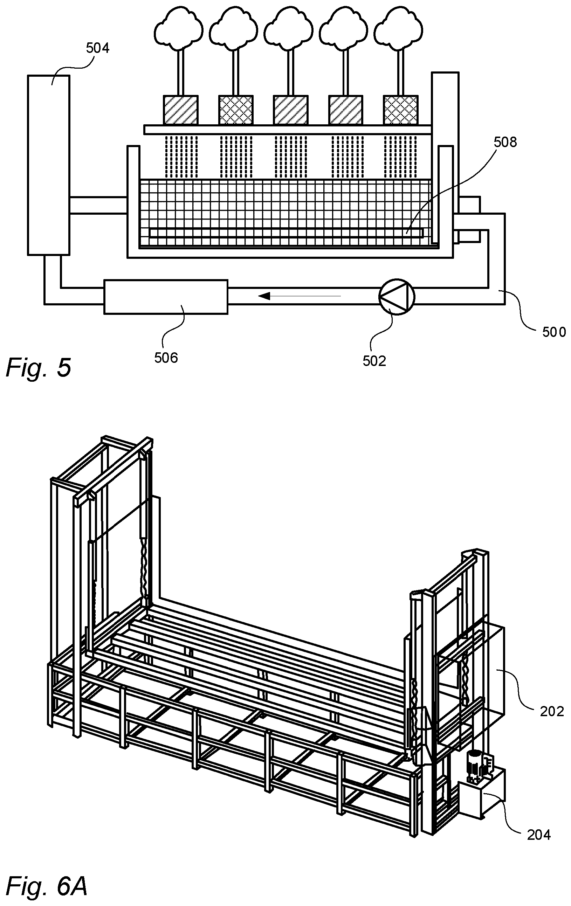

As illustrated in fig. 5, the open tank 200 may be provided with a pipe system 500 that allows the temperature-controlled water to be circulated in the tank. To enable the circulation of the water, a pump 502 may be provided. To remove soil and dirt, but also the pests flushed out from the root balls, a filter set up 504 may be provided in the pipe system 500. Further, a heat pump 506 may also be included in the pipe system 500 such that the water can be heated, thereby assuring that the water is kept within a pre-set temperature interval. In addition to the heat pump 506 or as an alternative to this, one or more heater elements 508 may be provided in the open tank 200.

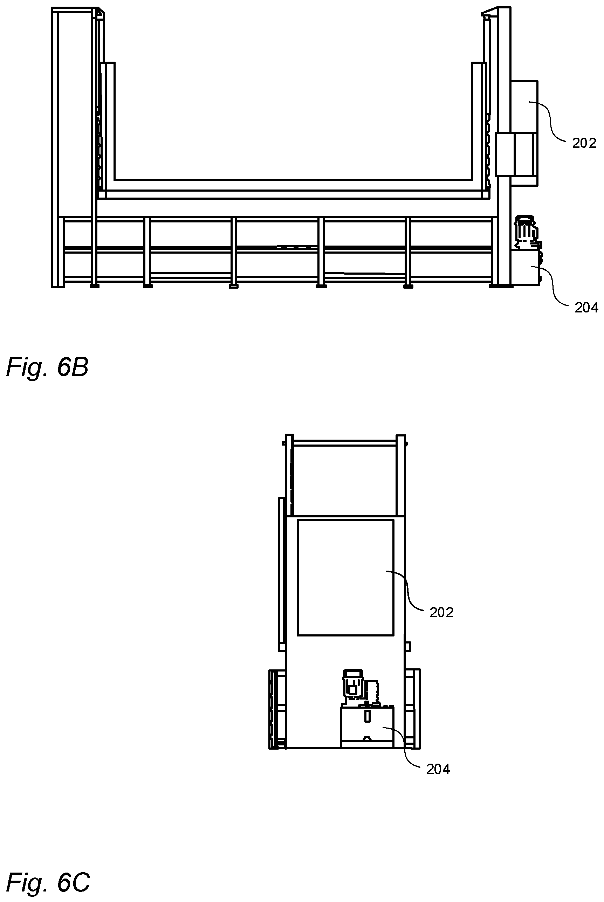

The system 416 comprising the open tank 200, the lifting arrangement 202 and the grating 206 may be embodied in various ways. By way of example, as illustrated in fig. 6A, the lifting arrangement 202 may comprise a frame structure and four hydraulic cylinders arranged for moving the grating 206, not illustrated in fig. 6A, between the lifted position and the lowered position by using the motor 204. Fig. 6B illustrates a front view of the lifting arrangement 202 and fig. 6C illustrates a side view of the same lifting arrangement.

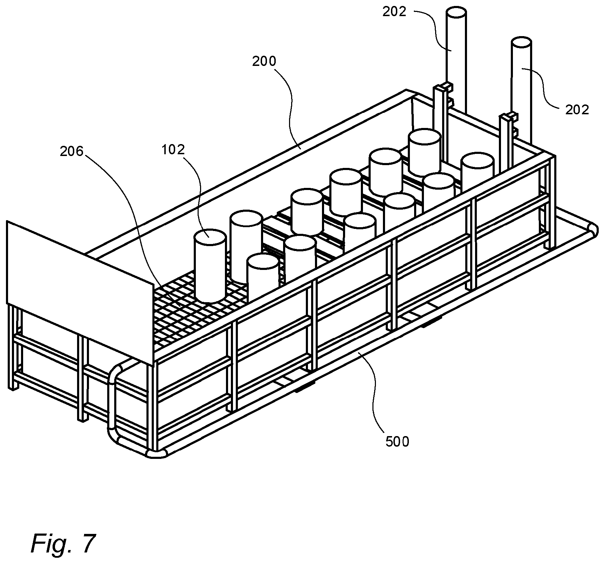

Fig. 7 illustrates yet another example on how the system may be embodied. As illustrated, the root balls 102 (for illustrative purposes the upper part of the plants have been left out) are placed on the grating 206, either directly on top of the grating or indirectly by being placed on a pallet placed on the grating. In line with the example illustrated in fig. 5, the pipe system 500 is illustrated.

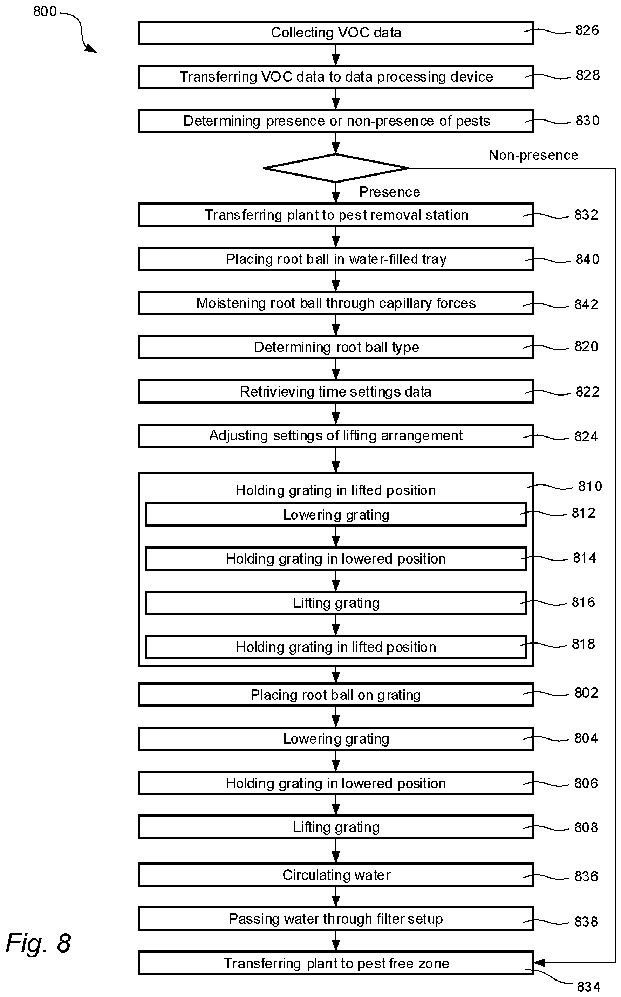

Fig. 8 is a flowchart illustrating a method 800 for removing the pests from the root ball 102 of the plant 100 using the system 416, wherein the pests may comprise invasive alien species and/or plant pathogens, wherein the system 416 comprises the open tank 200 arranged to hold the temperature-controlled water 210, the grating 206 placed in the open tank 200, and the lifting arrangement 202 arranged to move the grating between a lifted position and a lowered position. The method may comprise placing 802 the root ball 102 on the grating 206, lowering 804 the grating 206 to the lowered position such that the root ball 102 is submerged in the temperature-controlled water 210, holding 806 the grating 206 in the lowered position for a treatment time t-treat such that the root ball 102 is exposed to the temperature-controlled water 210 and killed off, and lifting 808 the grating 206 from the lowered position to the lifted position such that the temperature-controlled water 210 is drained off the root ball.

Optionally, the method may further comprise pre-processing 810 the root ball 102 by, for a number of times, lowering 812 the grating 206 to the lowered position such that the root ball 102 is submerged in the temperature-controlled water 210, holding 814 the grating 206 in the lowered position such that the temperature-controlled water 210 is entering into the root ball 102 for a heating sub-period t1, t3, t5, lifting 816 the grating 206 to the lifted position such that the temperature-controlled water 210 is drained off, and holding 818 the grating 206 in the lifted position for a drain-off sub-period t2, t4, t6.

Further, the method may comprise determining 820 a root ball type associated to the root ball 102, retrieving 822 time settings data comprising the heating sub-period and the drain-off sub-period linked to the root ball type from a memory 414, and adjusting 824 settings of the lifting arrangement 202 using the time settings data.

Prior to the step of placing 802 the root ball 102 on the grating 206 in the lifted position, the method may comprise collecting 826 volatile organic compound VOC data by using one or more VOC sensors 402 in the pest detection station 400 placed upstream the open tank 200, transferring 828 the VOC data to a data processing device 404, determining 830 presence or non-presence of the pests by using by the data processing device 404. In case the presence of the pests is determined, transferring 832 the plant 100 to the pest removal station 412 comprising the open tank 200, and perform the steps of placing 802 the root ball 102 on the grating 206, lowering 804 the grating 206, holding 806 the grating 206 in the lowered position, and lifting 808 the grating 206, thereby removing the pests from the root ball 102 of the plant 100, and transferring 834 the plant 100 to the pest-free zone 406, or in case the non-presence of the pests is determined, transferring 834 the plant 100 to the pest-free zone 406 without having the root ball 102 exposed to the temperature-controlled water 210 in the open tank 200.

Additionally, the method may comprise circulating 836 the temperature-controlled water 210 in the open tank 200 through the pipe system 500 using the pump 502, and passing 838 the temperature-controlled water 210 through the filter setup 504 arranged in the pipe system 500.

Further, the method may comprise placing 840 the root ball 102 on the water-filled tray 408, and moistening 842 the root ball 102 through capillary forces.

From the description above follows that, although various embodiments of the invention have been described and shown, the invention is not restricted thereto, but may also be embodied in other ways within the scope of the subject-matter defined in the following claims.

## Claims

1. A method (800) for removing pests from a root ball (102) of a plant (100) using a system (416), wherein the pests comprise invasive alien species, wherein the system (416) comprises an open tank (200) arranged to hold temperature-controlled water (210), a grating (206) placed in the open tank (200), and a lifting arrangement (202) arranged to move the grating between a lifted position and a lowered position, said method comprising
placing (802) the root ball (102) on the grating (206),
lowering (804) the grating (206) to the lowered position such that the root ball (102) is submerged in the temperature-controlled water (210),
holding (806) the grating (206) in the lowered position for a treatment time (t-treat) such that the pests in the root ball (102) are exposed to the temperature-controlled water (210) and killed off, and
lifting (808) the grating (206) from the lowered position to the lifted position such that the temperature-controlled water (210) is drained off the root ball.

2. The method (800) according to claim 1, further comprising pre-processing (810) the root ball (102) by
for a number of times,
lowering (812) the grating (206) to the lowered position such that the root ball (102) is submerged in the temperature-controlled water (210),
holding (814) the grating (206) in the lowered position such that the temperature-controlled water (210) is entering into the root ball (102) for a heating sub-period (t1, t3, t5),
lifting (816) the grating (206) to the lifted position such that the temperature-controlled water (210) is drained off, and
holding (818) the grating (206) in the lifted position for a drain-off sub-period (t2, t4, t6).

3. The method (800) according to claim 2, further comprising
determining (820) a root ball type associated to the root ball (102),
retrieving (822) time settings data comprising the heating sub-period and the drain-off sub-period linked to the root ball type from a memory (414), and
adjusting (824) settings of the lifting arrangement (202) using the time settings data.

4. The method (800) according to claim 3, wherein the root ball type is associated to a size of the root ball, and/or to a presence or non-presence of a covering of the root ball (102).

5. The method (800) according to any one of the preceding claims, further comprising, prior to the step of placing (802) the root ball (102) on the grating (206),
collecting (826) volatile organic compound VOC data by using one or more VOC sensors (402) in a pest detection station (400) placed upstream the open tank (200),
transferring (828) the VOC data to a data processing device (404),
determining (830) presence or non-presence of the pests by using by the data processing device (404),
in case the presence of the pests is determined,
transferring (832) the plant (100) to a pest removal station (412) comprising the open tank (200), and perform the steps of placing (802) the root ball (102) on the grating (206), lowering (804) the grating (206), holding (806) the grating (206) in the lowered position for the treatment time, and lifting (808) the grating (206), thereby removing the pests from the root ball (102) of the plant (100), and
transferring (834) the plant (100) to a pest-free zone (406), or
in case the non-presence of the pests is determined,
transferring (834) the plant (100) to the pest-free zone (406) without having the root ball (102) exposed to the temperature-controlled water (210) in the open tank (200).

6. The method (800) according to claim 5, wherein the step of determining (830) the presence or the non-presence of the pests comprises determining presence of alive pests, presence of dead pests, presence of pest egs, non-presence of the alive pests, non-presence of the dead pests and non-presence of the pest egs.

7. The method (800) according to any one of the preceding claims, wherein the pests are flat worms of the species Obama Nungara, the temperature-controlled water is in the range 34 to 44 degrees Celsius, and the pre-determined time is 8 to 17 minute.

8. The method (800) according to any one of the preceding claims, further comprising
circulating (836) the temperature-controlled water (210) in the open tank (200) through a pipe system (500) using a pump (502), and
passing (838) the temperature-controlled water (210) through a filter setup (504) arranged in the pipe system (500).

9. The method (800) according to claim 8, wherein the temperature-controlled water (210) is heated by using one or more heater elements (508) placed in a lower part of the open tank (200) and/or a heat pump (506) placed in the pipe system (500).

10. The method (800) according to any one of the preceding claims, wherein, in a loading position, the grating (206) is held above or at level with a brim (208) of the open tank (200), wherein the step of placing the root ball (102) in the open tank (200) is performed by using a forklift truck (212).

11. The method (800) according to any one of the preceding claims, further comprising
placing (840) the root ball (102) on a water-filled tray (408), and
moistening (842) the root ball (102) through capillary forces.

12. A system (416) for removing pests from a root ball (102) of a plant (100), wherein the pests comprise invasive alien species, said system (416) comprising
an open tank (200) arranged to hold temperature-controlled water (210),
a grating (206) placed in the open tank (200), and
a lifting arrangement (202) arranged to move the grating (206) between a lifted position and a lowered position,
wherein the root ball (102), when placed on the grating (206) in the lowered position, is exposed to the temperature-controlled water (210) for a treatment time, and, when placed on the grating (206) in the lifted position, the root ball (102) is held above a water level such that the temperature-controlled water (210) is drained off the root ball (102) into the open tank (200).

13. The system (416) according to claim 12, further comprising
a controller (410) configured to receive a root ball type associated to the root ball (102), retrieve time setting data linked to the root ball type from a memory (414), and adjust settings of the lifting arrangement (202) using the time settings data.

14. The system (416) according to any one of claim 12 or 13, wherein the pests are flat worms of the species Obama Nungara, the temperature-controlled water is in the range 34 to 44 degrees Celsius, and the pre-determined time is 8 to 17 minutes.

15. The system (416) according to any one of the claims 12 to 14, wherein, in a loading position, the grating (206) is held above or at level with a brim (208) of the open tank (200).
